(19) **Europäisches Patentamt**
**European Patent Office**
**Office européen des brevets**

(11) **EP 4 210 386 A1**

(12) **EUROPEAN PATENT APPLICATION**
published in accordance with Art. 153(4) EPC

(43) Date of publication:
**12.07.2023 Bulletin 2023/28**

(21) Application number: **20955685.1**

(22) Date of filing: **30.09.2020**

(51) International Patent Classification (IPC):
*H04W 36/00* (2009.01)

(52) Cooperative Patent Classification (CPC):
**H04W 36/00**

(86) International application number:
**PCT/CN2020/119390**

(87) International publication number:
**WO 2022/067660 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **LOU, Chong**
**Shenzhen, Guangdong 518129 (CN)**
• **FAN, Qiang**
**Shenzhen, Guangdong 518129 (CN)**
• **WANG, Rui**
**Shenzhen, Guangdong 518129 (CN)**
• **ZHAO, Yang**
**Shenzhen, Guangdong 518129 (CN)**

(74) Representative: **Huawei European IPR**
**Huawei Technologies Duesseldorf GmbH**
**Riesstraße 25**
**80992 München (DE)**

(54) **CELL CAMPING METHOD AND APPARATUS**

(57) This application discloses a cell camping method and an apparatus, to balance network load between different cells, and ensure service continuity of a terminal device. The method includes: After a terminal device camps on a first cell, a network device may send a first message to the terminal device, where the first message includes information about a second cell, the first cell corresponds to a first CC, and the second cell corresponds to a second CC; after receiving the second message, the terminal device sends a second message to the network device, where the second message may indicate the first cell and/or the second cell, or the second message may include measurement information of the first cell and/or the second cell; and the network device may determine, based on the second message, that the terminal device camps on the first cell or the second cell. This ensures network load balancing between different cells. In addition, the entire process does not require the terminal device to return from an RRC connected mode to an RRC idle mode, so that service continuity of the terminal device can be ensured.

FIG. 6

## Description

## TECHNICAL FIELD

This application relates to the field of communication technologies, and in particular, to a cell camping method and an apparatus.

## BACKGROUND

Currently, when a terminal device camps on a cell and enters a radio resource control (Radio Resource Control, RRC) connected mode, a network device may release the terminal device to enter an RRC idle mode, so that the terminal device selects, in the RRC idle mode, a new cell to camp on. However, when the terminal device returns from the RRC connected mode to the RRC idle mode, there is an interruption delay of 90 to 130 milliseconds. Consequently, a service of the terminal device is interrupted, and service continuity of the terminal device is affected.

## SUMMARY

This application provides a cell camping method and an apparatus, to balance network load between different cells, and ensure service continuity of a terminal device.

According to a first aspect, a cell camping method is provided. The method may be applied to a terminal device or a chip in the terminal device. For example, the method is applied to the terminal device. The method includes: After the terminal device camps on a first cell, the terminal device receives a first message from a network device, where the first message includes information about a second cell, the first cell corresponds to a first component carrier CC, and the second cell corresponds to a second CC; the terminal device sends the second message to the network device, where the second message may indicate the first cell and/or the second cell, or the second message may include measurement information of the first cell and/or the second cell, so that the network device can determine, through decision-making based on the second message, that the terminal device camps on a third cell; and the terminal device receives a third message from the network device, and determines, based on the third message, that the terminal device camps on the third cell, where the third cell is one of the first cell and the second cell.

In this embodiment of this application, when the terminal device camps on the first cell, the terminal device may notify the network device of a cell on which the terminal device can camp (that is, the second message indicates the first cell and/or the second cell), or notify the network device of the measurement information of the first cell and/or the second cell (that is, the second message includes the measurement information of the first cell and/or the second cell), so that the network device can select, based on an overall load status of a network, a cell for the terminal device to camp on, to ensure network load balancing between different cells. In this process, the terminal device does not need to perform RRC redirection, to be specific, does not need to return from an RRC connected mode to an RRC idle mode. Therefore, service interruption of the terminal device caused by RRC redirection can be avoided.

In a possible implementation, the information about the second cell may include: CC information of the second cell, and/or a cell identifier of the second cell.

It should be understood that the foregoing two types are merely examples rather than limitations, and other information may be further included in specific implementation.

In a possible implementation, the information about the second cell further includes any one or more of the following: downlink reference signal information of the second cell, a signal quality threshold of the second cell, and resource allocation information of the second cell.

In this implementation, the first message carries related information for measuring or accessing the second cell by the terminal device, so that efficiency of measuring or accessing the second cell by the terminal device can be improved.

In a possible implementation, the information about the second cell may alternatively not include the downlink reference signal information of the second cell, the signal quality threshold of the second cell, the resource allocation information of the second cell, and the like. Instead, after the terminal device receives the first message from the network device, and before the terminal device sends the second message to the network device, the terminal device searches for a system message of the second cell based on the CC information and/or the cell identifier of the second cell. The system message of the second cell includes any one or more of the following: downlink reference signal information of the second cell, a signal quality threshold of the second cell, and resource allocation information of the second cell. Then, the terminal device obtains the foregoing information from system information.

In this implementation, the terminal device obtains, by searching the system information of the second cell, the related information for measuring or accessing the second cell, so that a data volume of the first message can be reduced, and flexibility of the solution is improved.

In a possible implementation, after the terminal device camps on the first cell, and before the terminal device receives the first message from the network device, the terminal device may further send a fourth message to the network device. The fourth message is for initiating a radio resource control RRC connection establishment process, an RRC re-establishment process, an RRC resume process, or the like.

In this way, the terminal device may deliver the first message in the RRC connection establishment process, the RRC re-establishment process, or the RRC resume process, so that system resource utilization can be improved, and power consumption of the terminal device can be reduced.

In a possible implementation, after receiving the first message from the network device, and before sending the second message to the network device, the terminal device may further determine, based on the information about the second cell, whether the terminal device can camp on the second cell.

In this way, the second cell indicated by the terminal device in the second message may be a cell on which the terminal device can camp, to help the network device improve decision-making efficiency.

In a possible implementation, a specific implementation in which the terminal device determines, based on the information about the second cell, whether the terminal device can camp on the second cell may be as follows:

if signal quality of a downlink reference signal of the second cell is higher than or equal to the signal quality threshold of the second cell, the terminal device can camp on the second cell, or if signal quality of a downlink reference signal of the second cell is lower than the signal quality threshold of the second cell, the terminal device cannot camp on the second cell; or

if signal quality of a downlink reference signal of the second cell is higher than or equal to a sum of the signal quality threshold of the second cell and an offset value, the terminal device can camp on the second cell, or if signal quality of a downlink reference signal of the second cell is lower than a sum of the signal quality threshold of the second cell and an offset value, the terminal device cannot camp on the second cell; or

if signal quality of a downlink reference signal of the second cell is higher than the signal quality threshold of the second cell, the terminal device can camp on the second cell, or if signal quality of a downlink reference signal of the second cell is lower than or equal to the signal quality threshold of the second cell, the terminal device cannot camp on the second cell; or if signal quality of a downlink reference signal of the second cell is higher than a sum of the signal quality threshold of the second cell and an offset value, the terminal device can camp on the second cell, or if signal quality of a downlink reference signal of the second cell is lower than or equal to a sum of the signal quality threshold of the second cell and an offset value, the terminal device cannot camp on the second cell.

Certainly, the foregoing several manners are merely examples rather than limitations. During actual application, a possibility of another implementation is not excluded.

In a possible implementation, the terminal device may send the second message to the network device based on a resource of the first cell, or may send the second message to the network device based on a resource of the second cell.

In this implementation, flexibility of sending the second message by the terminal device is improved. Especially when a quantity of terminal devices in the first cell on which the terminal device currently camps is excessive, the terminal device sends the second message by using the second cell, to alleviate resource insufficiency in the first cell.

In a possible implementation, the second message includes any one or more of the following: CC information of the first cell, a cell identifier of the first cell, signal quality information of a downlink reference signal of the first cell, the CC information of the second cell, the cell identifier of the second cell, and signal quality information of the downlink reference signal of the second cell.

Certainly, the foregoing several types of information are merely examples rather than limitations. In a specific implementation process, a possibility of other information is not excluded.

According to a second aspect, a cell camping method is provided. The method may be applied to a terminal device or a chip in the terminal device. For example, the method is applied to the terminal device. The method includes: After the terminal device camps on a first cell, the terminal device receives a first message from a network device, where the first message includes information about a second cell, the first cell corresponds to a first component carrier CC, and the second cell corresponds to a second CC; and the terminal device determines that the terminal device camps on a third cell, where the third cell is one of the first cell and the second cell.

In this embodiment of this application, when the terminal device camps on the first cell, the terminal device can obtain the information about the second cell only by receiving an indication from a network side to perform physical layer measurement. The terminal device does not need to periodically perform inter-frequency measurement. This can reduce power consumption of the terminal device. After the terminal device obtains the information about the second cell, the terminal device directly determines, through decision-making, a cell to be camped on, and does not need to notify the network device. This is easy to be implemented, so that system overheads can be reduced and power consumption of the terminal device can be reduced.

In a possible implementation, the first message may be any one of a random access response RAR message, a response message for a random access signal and payload data, a radio resource control RRC dedicated message, or a media access control MAC layer message.

In this implementation, the terminal device may not need to periodically start measurement, but start measurement when required (to be specific, when the first message is received), so that power consumption of the terminal device can be reduced.

In a possible implementation, the information about the second cell may include: CC information of the second cell, and/or a cell identifier of the second cell.

It should be understood that the foregoing two types are merely examples rather than limitations, and other information may be further included in specific implementation.

In a possible implementation, the information about the second cell further includes a signal quality threshold of the second cell. In this case, the terminal device may specifically determine, in the following manners, that the terminal device camps on the third cell:

if signal quality of a downlink reference signal of the second cell is higher than or equal to the signal quality threshold of the second cell, determining that the terminal device camps on the second cell; or

if signal quality of a downlink reference signal of the second cell is higher than or equal to a sum of the signal quality threshold of the second cell and an offset value, determining that the terminal device camps on the second cell; or

if signal quality of a downlink reference signal of the second cell is higher than or equal to the signal quality threshold of the second cell, determining, according to a preset criterion, that the terminal device camps on the first cell or the second cell; or

if signal quality of a downlink reference signal of the second cell is higher than or equal to a sum of the signal quality threshold of the second cell and an offset value, determining, according to a preset criterion, that the terminal device camps on the first cell or the second cell.

Certainly, the foregoing several manners are merely examples rather than limitations. During actual application, a possibility of another implementation is not excluded.

In a possible implementation, the preset criterion may include: randomly selecting the first cell or the second cell for camping; or selecting a cell with a higher priority in the first cell and the second cell for camping.

Certainly, the foregoing two manners are merely examples rather than limitations. During actual application, a possibility of another implementation is not excluded.

In a possible implementation, the information about the second cell may alternatively not include the signal quality threshold of the second cell. In this case, the terminal device may specifically determine, in the following manners, that the terminal device camps on the third cell:

if signal quality of a downlink reference signal of the first cell is higher than or equal to signal quality of a downlink reference signal of the second cell, determining that the terminal device camps on the first cell; or

if signal quality of a downlink reference signal of the first cell is lower than signal quality of a downlink reference signal of the second cell, determining that the terminal device camps on the second cell; or

if signal quality of a downlink reference signal of the first cell is higher than signal quality of a downlink reference signal of the second cell, determining that the terminal device camps on the first cell; or

if signal quality of a downlink reference signal of the first cell is lower than or equal to signal quality of a downlink reference signal of the second cell, determining that the terminal device camps on the second cell.

Certainly, the foregoing several manners are merely examples rather than limitations. During actual application, a possibility of another implementation is not excluded.

According to a third aspect, a cell camping method is provided. The method may be applied to a network device or a chip in the network device. The method includes: after a terminal device camps on a first cell, sending a first message to the terminal device, where the first message includes information about a second cell, the first cell corresponds to a first component carrier CC, and the second cell corresponds to a second CC; receiving a second message from the terminal device, where the second message indicates the first cell and/or the second cell, or the second message includes measurement information of the first cell and/or the second cell; and sending a third message to the terminal device, where the third message indicates the terminal device to camp on a third cell, and the third cell is one of the first cell and the second cell.

In a possible implementation, the information about the second cell includes: CC information of the second cell, and/or a cell identifier of the second cell.

In a possible implementation, the information about the second cell further includes any one or more of the following: downlink reference signal information of the second cell, a signal quality threshold of the second cell, and resource allocation information of the second cell.

In a possible implementation, after the sending a first message to the terminal device, and before the receiving a second message from the terminal device, the method further includes: sending a system message of the second cell, where the system message of the second cell includes any one or more of the following: downlink reference signal information of the second cell, a signal quality threshold of the second cell, and resource allocation information of the second cell.

In a possible implementation, after the terminal device camps on the first cell, and before the sending a first message to the terminal device, the method further includes: receiving a fourth message from the terminal device, where the fourth message is for initiating a radio resource control RRC connection establishment process, an RRC re-establishment process, or an RRC resume process.

In a possible implementation, the receiving a second message from the terminal device includes: receiving the second message from the terminal device based on a resource of the first cell; or receiving the second message from the terminal device based on a resource of the second cell.

In a possible implementation, the second message includes any one or more of the following: CC information of the first cell, a cell identifier of the first cell, signal quality information of a downlink reference signal of the first cell, the CC information of the second cell, the cell identifier of the second cell, and signal quality information of a downlink reference signal of the second cell.

According to a fourth aspect, a cell camping method is provided. The method may be applied to a network device or a chip in the network device. The method includes: after a terminal device camps on a first cell, sending a first message to the terminal device, where the first message includes information about a second cell, the first cell corresponds to a first component carrier CC, and the second cell corresponds to a second CC.

In a possible implementation, the first message is any one of a random access response RAR message, a response message for a random access signal and payload data, a radio resource control RRC dedicated message, or a media access control MAC layer message.

In a possible implementation, the information about the second cell includes: CC information of the second cell, and/or a cell identifier of the second cell.

In a possible implementation, the information about the second cell further includes a signal quality threshold of the second cell.

According to a fifth aspect, a communication apparatus is provided, including a processor and a memory. The processor is coupled to the memory. The processor is configured to implement the method in any one of the first aspect or the possible implementations of the first aspect or any one of the second aspect or the possible implementations of the second aspect.

According to a sixth aspect, a communication apparatus is provided, including a processor and a memory. The processor is coupled to the memory. The processor is configured to implement the method in any one of the third aspect or the possible implementations of the third aspect or any one of the fourth aspect or the possible implementations of the fourth aspect.

According to a seventh aspect, a communication apparatus is provided, including a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement, by using a logic circuit or executing code instructions, the method in any one of the first aspect or the possible implementations of the first aspect or any one of the second aspect or the possible implementations of the second aspect.

According to an eighth aspect, a communication apparatus is provided, including a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement, by using a logic circuit or executing code instructions, the method in any one of the third aspect or the possible implementations of the third aspect or any one of the fourth aspect or the possible implementations of the fourth aspect.

According to a ninth aspect, a computer-readable storage medium is provided. The computer-readable storage medium stores a computer program or instructions. When the computer program or the instructions are executed by a communication apparatus, the method in any one of the first aspect or the possible implementations of the first aspect or any one of the second aspect or the possible implementations of the second aspect is implemented.

According to a tenth aspect, a computer-readable storage medium is provided. The computer-readable storage medium stores a computer program or instructions. When the computer program or the instructions are executed by a communication apparatus, the method in any one of the third aspect or the possible implementations of the third aspect or any one of the fourth aspect or the possible implementations of the fourth aspect is implemented.

According to an eleventh aspect, a chip is provided. The chip is coupled to a memory, and is configured to read and execute program instructions stored in the memory, so that the method in any one of the first aspect or the optional implementations of the first aspect or any one of the second aspect or the optional implementations of the second aspect is performed.

According to a twelfth aspect, a chip is provided. The chip is coupled to a memory, and is configured to read and execute program instructions stored in the memory, so that the method in any one of the third aspect or the possible implementations of the third aspect or any one of the fourth aspect or the possible implementations of the fourth aspect is performed.

According to a thirteenth aspect, a computer program product is provided, including instructions. When the computer program product runs on a computer, the method in any one of the first aspect or the optional implementations of the first aspect or any one of the second aspect or the optional implementations of the second aspect is performed.

According to a fourteenth aspect, a computer program product is provided, including instructions. When the computer program product runs on a computer, the method in any one of the third aspect or the possible implementations of the third aspect or any one of the fourth aspect or the possible implementations of the fourth aspect is performed.

According to a fifteenth aspect, a communication system is provided, including:

the apparatus according to any one of the fifth aspect or the optional implementations of the fifth aspect, and the apparatus according to any one of the sixth aspect or the optional implementations of the sixth aspect; or
the apparatus according to any one of the seventh aspect or the optional implementations of the seventh aspect, and the apparatus according to any one of the eighth aspect or the optional implementations of the eighth aspect.

For beneficial effects of the implementations in the third aspect to the fifteenth aspect, refer to beneficial effects of corresponding implementations in the first aspect and the second aspect. Details are not described herein again.

**BRIEF DESCRIPTION OF DRAWINGS**

FIG. 1 is a diagram of an architecture of a possible communication system to which an embodiment of this application is applicable;
FIG. 2 is a flowchart of four-step random access;
FIG. 3 is a flowchart of two-step random access;
FIG. 4 is a flowchart of a cell reselection process based on RRC redirection;
FIG. 5 is a flowchart of a cell reselection process based on a cell reselection priority;
FIG. 6 is a flowchart of a cell camping method according to an embodiment of this application;
FIG. 7 is a flowchart of another cell camping method according to an embodiment of this application;
FIG. 8 is a flowchart of a CC camping method according to an embodiment of this application;
FIG. 9 is a schematic diagram of a structure of a communication apparatus 900 according to an embodiment of this application; and
FIG. 10 is a schematic diagram of a structure of a communication apparatus 1000 according to an embodiment of this application.

**DESCRIPTION OF EMBODIMENTS**

Technical solutions in embodiments of this application may be applied to various communication systems, for example, a long term evolution (Long Term Evolution, LTE) system, a universal mobile telecommunications system (Universal Mobile Telecommunications System, UMTS), a code division multiple access (Code Division Multiple Access, CDMA) system, a wireless local area network (Wireless Local Area Network, WLAN), a 5th generation (5th generation, 5G) communication system, a 6th generation (6th generation, 6G) communication system or another future evolved system, or various other wireless communication systems using a radio access technology. The technical solutions in embodiments of this application can be used provided that there is a cell or CC camping requirement in the communication system.

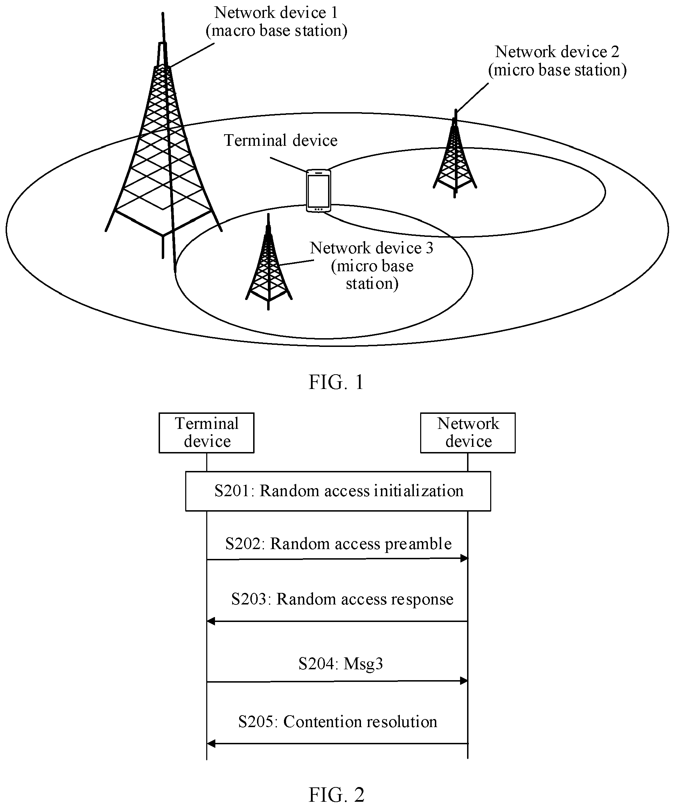

For example, FIG. 1 shows a possible communication system to which an embodiment of this application is applicable. The communication system includes at least one network device (where three network devices are specifically used as an example in FIG. 1) and at least one terminal device (where one terminal device is specifically used as an example in FIG. 1). The terminal device is located within coverage of one or more cells (CCs or frequencies) provided by the network device, and there may be one or more cells that serve the terminal device. When there are a plurality of cells that serve the terminal device, the terminal device may work in a carrier aggregation (Carrier Aggregation, CA), dual connectivity (Dual Connectivity, DC), or coordinated multipoint transmission mode, and at least one cell provides more than one system parameter (Numerology) and provides a radio resource for the terminal device at the same time. When the terminal device is moved, the terminal device may perform cell selection or cell handover between different cells. These different cells may be distributed in one network device, that is, co-site, or may be distributed in different network devices, that is, not co-site (or cross-site). This is not limited in this application.

The terminal device in embodiments of this application may also be referred to as a terminal, user equipment (User Equipment, UE), a mobile station, a mobile terminal, or the like. The terminal device may be a mobile phone, a tablet computer, a computer having a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like. A specific technology and a specific device form that are used by the terminal device are not limited in embodiments of this application. In embodiments of this application, an apparatus configured to implement a function of the terminal device may be a terminal device, or may be an apparatus, for example, a chip system, that can support the terminal device in implementing the function. The apparatus may be deployed on the terminal device, or may be used together with the terminal device. In embodiments of this application, the chip system may include a chip, or may include a chip and another discrete component. The technical solutions provided in embodiments of this application are described by using an example in which the apparatus configured to implement the function of the terminal device is the terminal device.

The network device in embodiments of this application is an access network (Radio Access Network, RAN) device used by the terminal device to access the mobile communication system in a wireless manner, and may include but is not limited to a base station, an evolved base station (evolved NodeB, eNodeB), a transmission reception point (Transmission Reception Point, TRP), a next generation base station (next generation NodeB, gNB) in a 5G mobile communication system, a base station in a future mobile communication system, an access node in a Wi-Fi system, or the like. An interface between network devices is referred to as an Xn interface, and an interface between the network device and the terminal device may be a Uu interface (or referred to as an air interface). Certainly, in future communication, names of these interfaces may remain unchanged, or may be replaced with other names. This is not limited in this application.

In embodiments of this application, coverage capabilities of different network devices may be different. For example, in FIG. 1, a network device 1 is a macro base station (Macro eNB), and a network device 2 and a network device 3 are micro base stations (Small eNBs). The micro base station may also be referred to as a small base station. The macro base station is large in size, supports a large quantity of users, and covers a wide area, usually tens of kilometers. The micro base station is a micro base station, and usually is a small base station installed in a building or a dense area. This base station has a small size and a small coverage area, and supports a small quantity of users.

The following describes some terms in embodiments of this application, to facilitate understanding of a person skilled in the art.

    (1) Four-step random access: In an LTE system and a 5G new radio (New Radio, NR) system, during initial access, a terminal device switches from an RRC idle mode to an RRC connected mode; and after a wireless connection is interrupted, the terminal device re-establishes an RRC connection to a network device, and obtains an uplink timing advance (Timing Advance, TA) through random access.

FIG. 2 is a flowchart of the four-step random access, including the following steps.

S201: A terminal device and a network device perform random access initialization.

Initializing a configuration parameter of random access includes determining a physical random access channel (Physical Random Access Channel, PRACH) resource set corresponding to an available random access preamble (Preamble), and the like.

S202: The terminal device sends the Preamble to the network device. (This is the 1st step of the four-step random access.)

Specifically, the Preamble may be carried in a message 1 (referred to as Msg1 below). A main function of the Preamble is to notify the network device that there is a random access request, and enable the network device to estimate a transmission delay between the network device and the terminal device, so that the access network device can calibrate an uplink advance (Uplink Timing) and notify the terminal device of calibration information by using a timing advance command (Timing Advance command).

S203: The network device sends a random access response (Random Access Response, RAR) to the terminal device, and the terminal device receives the RAR sent by the network device. (This is the 2nd step of the four-step random access.)

Specifically, the terminal device may monitor a physical downlink control channel (Physical Downlink Control Channel, PDCCH) by using a random access radio network temporary identifier (Random Access Radio Network Temporary Identifier, RA-RNTI). If the terminal device receives scheduling information, namely, downlink control information (Downlink Control Information, DCI), that belongs to the terminal device, the terminal device receives, on a PDSCH based on the DCI information, a RAR message delivered by the network device.

Specifically, the random access response is carried in a message 2 (referred to as Msg2 below). After sending the Preamble, the terminal device monitors the corresponding PDCCH in a RAR response window based on an RA-RNTI value corresponding to the Preamble. If a Preamble carried in the response received by the terminal device is consistent with the Preamble sent in Msgl, the terminal device stops monitoring the RAR. Specifically, the network device may send the RAR to the terminal device through the PDSCH.

The RAR includes an uplink timing advance, an uplink grant (UL grant) allocated to a message 3 (referred to as Msg3 below), a temporary cell radio network temporary identifier (Cell Radio Network Temporary Identifier, temporary C-RNTI) allocated by the network side, and the like. The PDCCH carrying a Msg2 scheduling message is scrambled by using the RA-RNTI.

S204: The terminal device sends a scheduling-based transmission message, that is, Msg3, to the network device, and the terminal device receives Msg3 sent by the network device. (This is the 3rd step of the four-step random access.)

The terminal device sends Msg3 to the network device based on the uplink grant and uplink timing advance information in Msg2 through a physical uplink shared channel (Physical Uplink Shared Channel, PUSCH). Herein, content of Msg3 may alternatively be different based on different statuses of the terminal device and different application scenarios. For initial random access, the terminal device sends an RRC connection request message by using Msg3. The RRC connection request message needs to carry terminal device identification information, so that the network device performs conflict resolution in S205, and selects, based on the received terminal device identification information, a terminal device whose conflict resolution succeeds.

Because the network device sends MAC protocol data units (Protocol Data Units, PDUs) to a plurality of terminal devices in S203, the terminal devices may receive different RARs. Correspondingly, the terminal devices may also perform different behavior. After obtaining, through monitoring, a RAR that belongs to each terminal device, the terminal device may send Msg3 to the access network device based on specific content included in the RAR.

S205: The network device sends a contention resolution to the terminal device, and the terminal device receives the contention resolution sent by the network device, that is, a message 4 (referred to as Msg4 below). (This is the 4th step of the four-step random access.)

Contention occurs when the plurality of terminal devices use a same preamble to initiate random access. A maximum of one terminal device in terminal devices contending for a same resource can succeed in accessing. In this case, the network device sends a contention resolution message to the terminal device through the PDSCH. If the terminal device determines that Msg4 includes all or some bits of the terminal device identification information sent in S204, the terminal device determines that the conflict resolution succeeds, and enters the RRC connected mode.

(2) Two-step random access: To shorten a random access latency, the 5G NR system supports the two-step random access in addition to a currently conventional four-step random access method. The two-step random access is a research hotspot of random access in the current 5G NR system.

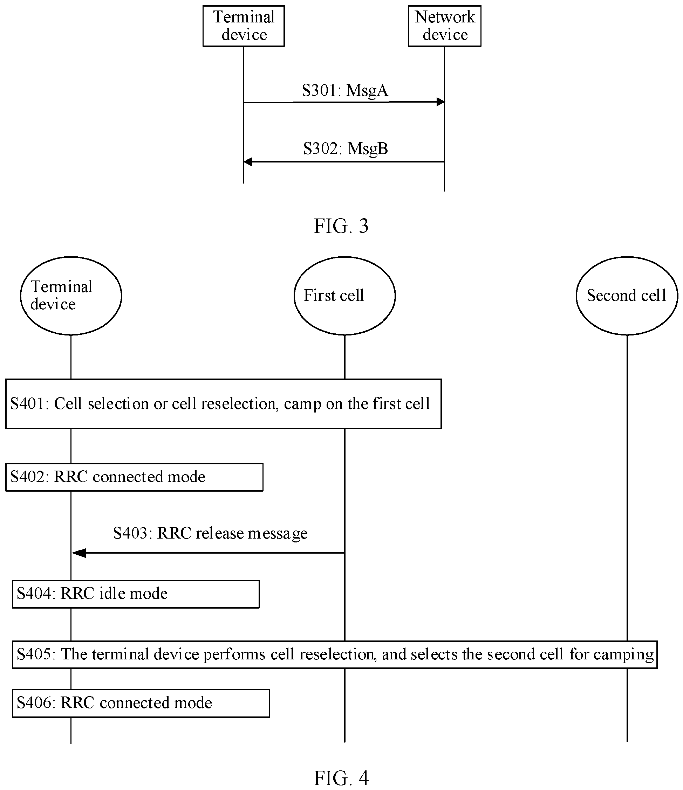

FIG. 3 is a flowchart of the two-step random access, including the following steps.

S301: A terminal device sends a message A (referred to as MsgA below) to a network device, and the network device receives MsgA.

Specifically, MsgA includes a random access signal and payload data. The random access signal may include a Preamble and/or a demodulation reference signal (Demodulation Reference Signal, DMRS). The random access signal is for receiving the payload data. The payload data may correspond to content included in Msg3 in the foregoing four-step random access mechanism. For example, the payload data may include an RRC connection request and an identifier of the terminal device.

S302: The network device sends a message B (referred to as MsgB below) to the terminal device, and the terminal device receives MsgB.

Specifically, MsgB is for carrying a response message for the random access signal and the payload data. The response message may include at least one of the following: temporary C-RNTI information, timing advance command (TA command) information, uplink grant information, contention resolution identity (Contention Resolution ID) information, and the like. The contention resolution identity may be some or all of content of the payload data. In addition, the response message further includes a control plane message (which may alternatively be considered as a scheduling-based transmission response message). For example, based on different statuses of the terminal device and different triggering scenarios, the RAR may further include one of the following: an RRC connection (RRCSetup) message, an RRC re-establishment (RRCReestablishment) message, an RRC resume (RRCResume) message, and the like.

(3) Terms "system" and "network" may be used interchangeably in embodiments of this application. "At least one" means one or more, and "a plurality of" means two or more. The term "and/or" describes an association relationship for describing associated objects and represents that three relationships may exist. For example, A and/or B may represent the following three cases: Only A exists, both A and B exist, and only B exists. A and B each may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one of a, b, or c may represent a, b, c, a and b, a and c, b and c, or a, b, and c.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first priority criterion and a second priority criterion are merely used to distinguish between different criteria, but do not indicate different content, priorities, importance, or the like of the two criteria.

In addition, the terms "include" and "have" in embodiments, claims, and accompanying drawings of this application are not exclusive. For example, a process, a method, a system, a product, or a device including a series of steps or modules is not limited to the listed steps or modules, and may further include steps or modules that are not listed.

Two frequency ranges are specified in the 5G mobile communication system. One is a frequency range (Frequency Range, FR) 1, and is usually referred to as sub-6 GHz. The other is an FR 2, and is usually referred to as millimeter wave (Millimeter Wave). For different frequency ranges, system bandwidths and subcarrier spacings are different. The FR 1 has a low frequency and good coverage. The FR 2 has a high frequency, large bandwidth, and large capacity. During actual network deployment, multi-frequency joint deployment is often used to address coverage and capacity issues. For example, a cell 1 with a frequency of 2.1 GHz, a cell 2 with a frequency of 3.5 GHz, and a cell 3 with a frequency of 28 GHz are simultaneously deployed in a same area. The 2.1 GHz can meet a wide coverage requirement, and the 3.5 GHz and the 28 GHz can be used as hotspot coverage to meet a high-rate service requirement.

Usually, one cell may correspond to one component carrier (Component Carrier, CC). In this case, a CC and a cell may be equivalent concepts, and one CC may be equivalent to one cell. For example, a first cell corresponds to a first CC, the first CC is the first cell, a second cell corresponds to a second CC, and the second CC is the second cell. In this specification, the CC may also be referred to as a carrier (carrier). Therefore, the CC and the carrier (carrier) may be replaced with each other. For example, the first CC and a first carrier may be replaced with each other, and the second CC and a second carrier may be replaced with each other. Usually, one CC corresponds to one frequency. Therefore, unless otherwise specified, the CC and the frequency can be replaced with each other. For example, the first CC and a first frequency may be replaced with each other, and the second CC and a second frequency may be replaced with each other.

One cell may alternatively correspond to a plurality of CCs, and each CC corresponds to one frequency. In this case, the plurality of CCs or a plurality of frequencies may correspond to a same cell.

Therefore, in this specification, unless otherwise specified, a cell corresponding to a CC or a frequency may include the foregoing two cases (to be specific, one CC or frequency corresponds to one cell, or a plurality of CCs or frequencies correspond to one cell). For example, the first CC or the first frequency corresponds to the first cell, and the second CC or the second frequency corresponds to the second cell. The first cell and the second cell may be different cells, or may be a same cell.

When the terminal device moves in a multi-frequency networking scenario, processes such as cell selection, cell reselection, and cell handover between different cells of a plurality of frequencies are related.

The following uses a common mobility process as an example to separately describe cell selection and cell reselection.

(1) Cell selection: When a terminal device is powered on or a situation, for example, a radio link failure, occurs, the terminal device performs a cell search process and selects, as soon as possible, a suitable cell to camp on. This process is referred to as "cell selection".

The terminal device may perform the cell search process based on a target cell indicated by redirection carrier information that is carried in an RRC release (release) message, or perform the cell search process based on information stored in the terminal device, for example, a frequency, or may search, in all bandwidths supported by the terminal device, for all supported radio access technologies (Radio Access Technologies, RATs) to perform the cell search process, until a suitable cell is found. In the cell search process, the terminal device reads system information of a currently searched cell, and obtains parameters such as Qrxlevmeas, Qrxlevmin, and Qrxlevminoffset of the cell. The terminal device evaluates, according to an S criterion in the 3rd generation partnership project (3rd Generation Partnership Project, 3GPP) standard, whether the cell is a suitable cell. If the cell is a suitable cell (that is, meets the S criterion), the terminal device camps on the cell, reads system information of the cell, listens to a paging message of the cell, and the like. In this way, a cell selection process is completed. If the cell is not a suitable cell (that is, does not meet the S criterion), the terminal device continues to perform the cell search process until a suitable cell (to be specific, a cell that meets the S criterion) is found for camping.

A formula of the S criterion is as follows:

$$Srxlev > 0;$$

The Srxlev is a level value (unit: decibel (decibel, dB)) obtained by performing measurement and calculation on a reference signal of a found cell in a cell selection/reselection process. If a Srxlev value (S value for short) of the cell is greater than 0, it indicates that the cell meets the S criterion, and the cell is a suitable cell (a cell suitable for camping).

Usually, a low-frequency cell (for example, the cell 1 whose frequency is 2.1 GHz) has wide coverage. If a large quantity of terminal devices choose to camp on and access the cell 1 in the cell selection process, network load is unbalanced between cells. However, for a terminal device that camps on 2.1 GHz and that is in an RRC idle (idle) mode, once the terminal device has a requirement for a high-rate service, and if the terminal device needs to be transferred to 3.5 GHz, a complex cell reselection process needs to be performed.

(2) Cell reselection: After a terminal device in an RRC idle mode camps on a cell, as the terminal device moves, the terminal device may need to move to another cell having a higher priority or a better signal to camp on. This process is referred to as a cell reselection process. Cell selection is a process of finding a suitable cell as soon as possible, and cell reselection is a process of selecting a more suitable cell (that is, the cell selection process is performed before the cell reselection process).

The following describes two cell reselection methods.

Method 1: Based on RRC redirection

In a multi-frequency networking scenario, the terminal device camps on a first cell through cell selection or cell reselection, where the first cell corresponds to CC 1=2.1 GHz; and initiates initial random access to enter an RRC connected mode.

When a network device perceives that the first cell is congested, or expects the terminal device to camp on a second cell, the network device may release the terminal device to enter the RRC idle mode by using an RRC redirection process, and redirect the terminal device to the second cell, where the second cell corresponds to CC 2=3.5 GHz, so as to relieve load congestion in the first cell and perform load balancing.

As shown in FIG. 4, a cell reselection process based on RRC redirection includes the following steps.

S401: A terminal device camps on a first cell through cell selection (that is, initial access) or cell reselection.

S402: The terminal device initiates initial access to the first cell, and enters an RRC connected mode.

S403: A network device delivers an RRC release message.

The RRC release message includes: A. redirection frequency information, for indicating frequency information of a target cell (namely, the second cell), for example, 3.5 GHz, so that when entering an RRC idle mode to perform a cell selection process, the terminal device may preferentially consider selecting the second cell for camping; and B. a cell reselection priority, where for example, a priority of 3.5 GHz is set to a high priority, so that when entering the RRC idle mode to perform the cell selection process, the terminal device may preferentially consider selecting the second cell with the high priority for camping.

S404: The terminal device enters the RRC idle mode.

S405: The terminal device performs cell reselection, and selects the second cell for camping.

S406: The terminal device initiates access to the second cell, and enters the RRC connected mode.

In the foregoing solution, the terminal device needs to first return to the RRC idle mode before performing the cell reselection process, to redirect from the CC 1 to the CC 2. However, when the terminal device returns to the RRC idle mode, there is an interruption delay of 90 to 130 milliseconds. Consequently, a service of the terminal device is interrupted, and service continuity of the terminal device is affected.

Method 2: Based on a cell reselection priority

In a multi-frequency networking scenario, the network device may further set different cell reselection priorities for different frequencies. For example, when the first cell corresponding to the CC 1 is congested, the network device may set a reselection priority of the second cell corresponding to the CC 2 to a high priority, so that when performing cell reselection, the terminal device may preferentially consider camping on the second cell corresponding to the CC 2.

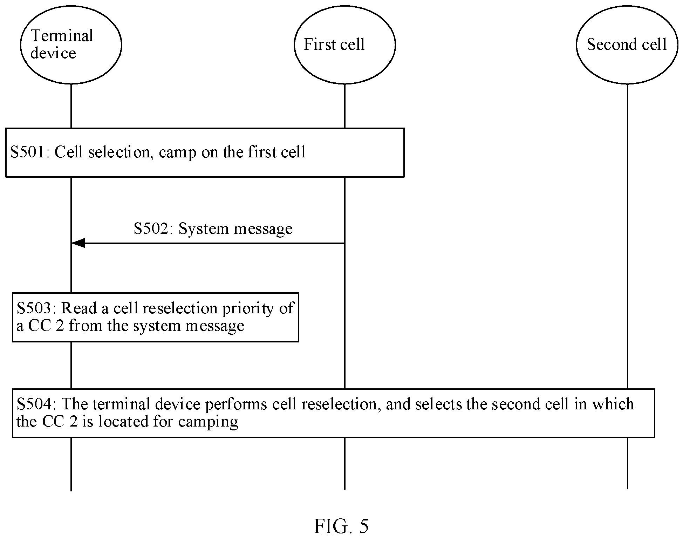

As shown in FIG. 5, a cell reselection process based on a cell reselection priority includes the following steps.

S501: A terminal device performs cell selection, and camps on a first cell, where the first cell corresponds to CC 1=2.1 GHz.

S502: The terminal device receives a system message sent by the first cell, where the system message includes cell reselection parameter information of a plurality of frequencies, and includes a cell reselection priority of CC 2=3.5 GHz, and a network device may set the cell reselection priority corresponding to CC 2=3.5 GHz to "high".

Optionally, the system message may further include a value of a parameter of a cell reselection standard.

S503: The terminal device reads the cell reselection priority of the CC 2 from the system message.

S504: The terminal device starts periodic inter-frequency cell measurement, preferentially considers a second cell in which the CC 2 is located as a target inter-frequency cell for cell reselection, and when the second cell in which the CC 2 is located meets the cell reselection standard, for example, when Srxlev of the second cell is greater than a preset threshold, the terminal device reselects the second cell.

In the foregoing solution, the cell reselection priority of the CC 2 is set to a high priority by using the system message. However, the priority is cell-level information and cannot be dynamically adjusted. If a large quantity of terminal devices in coverage of the second cell in which the CC 2 is located need to perform cell reselection, a large quantity of terminal devices in the RRC idle mode reselect the second cell in which the CC 2 is located in a short period of time. Consequently, network load is unbalanced between CCs. In addition, for a terminal device in the RRC idle mode that first camps on the first cell in which the CC 1 is located, inter-frequency measurement needs to be periodically performed, and the terminal device is handed over to the CC 2 through cell reselection. This is highly complex, and power consumption on a terminal device side is high.

To resolve the foregoing one or more technical problems, embodiments of this application provide one or more cell camping methods and apparatuses. When the terminal device in the RRC idle mode or an RRC inactive (inactive) mode camps on the first cell in which the CC 1 is located, the network device may send a first message to the terminal device. The first message includes information about one or more second cells, and a CC of each second cell is different from a CC of the first cell. After receiving the first message, the terminal device may perform measurement on each second cell based on the first message, and report a second message to the network device. The second message includes measurement information of the first cell and/or at least one second cell, or the second message indicates a cell (for example, the first cell and/or the at least one second cell) that can be camped on to the network device. In this way, the network device may determine, through decision-making based on the second message and a load status of an entire network, a cell on which the terminal device camps. This can ensure network load balance between different CCs. In this process, the terminal device does not need to return from the RRC connected mode to the RRC idle mode. Therefore, service interruption of the terminal device caused by RRC redirection can be avoided. Alternatively, when the terminal device in the RRC idle mode or an RRC inactive mode camps on the first cell in which the CC 1 is located, the network device may send a first message to the terminal device. The first message includes information about one or more second cells, and a CC of each second cell is different from a CC of the first cell. After receiving the first message, the terminal device may perform measurement on each second cell based on the first message, and determine, through decision-making, a cell on which the terminal device camps. In this process, the terminal device does not need to return from the RRC connected mode to the RRC idle mode. Therefore, service interruption of the terminal device caused by RRC redirection can be avoided. In addition, the terminal device determines, through decision-making, a cell to be camped on. This process is easy to be implemented, and the network device may not need to be notified, so that system overheads can be reduced and power consumption of the terminal device can be reduced.

To make the objectives, technical solutions, and advantages of embodiments of this application clearer, the following further describes embodiments of this application in detail with reference to the accompanying drawings.

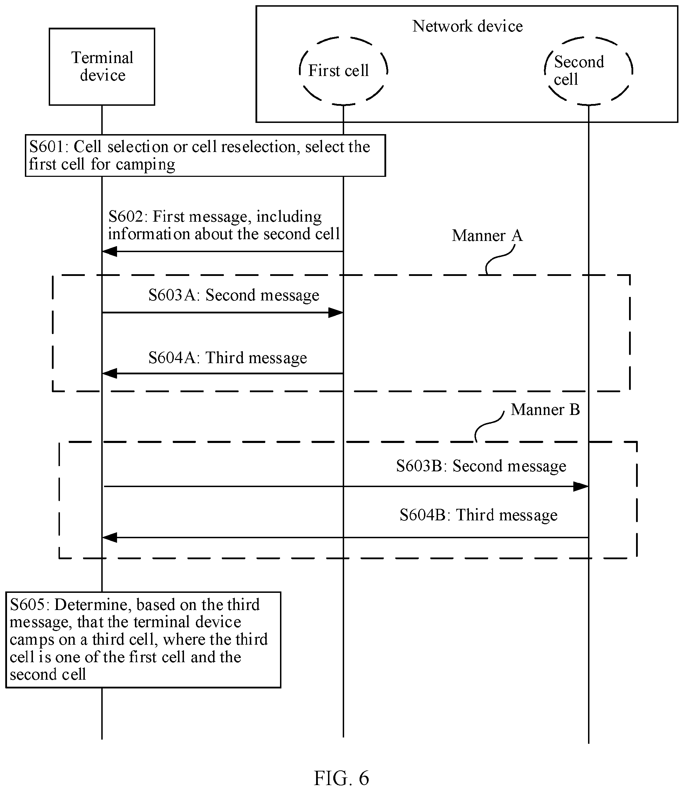

FIG. 6 shows a cell camping method according to an embodiment of this application. In the following description process, an example in which the method is applied to the scenario shown in FIG. 1 and one cell corresponds to one CC is used.

S601: A terminal device performs cell selection or cell reselection to select a first cell for camping.

The first cell corresponds to a first CC. Herein, one cell corresponds to one CC, and selecting the first cell is equivalent to selecting the first CC.

Specifically, when the terminal device is in an RRC idle mode or an RRC inactive mode, the terminal device performs initial cell selection, determines that the first CC meets a cell selection criterion, and camps on the first cell corresponding to the first CC. The cell selection criterion may be an S criterion.

For a specific implementation process of S601, refer to the foregoing related descriptions of cell selection or cell reselection. Details are not described herein again.

S602: After the terminal device camps on the first cell, a network device sends a first message to the terminal device, and the terminal device receives the first message from the network device.

The first message includes information about one or more second cells. This is not limited in this application.

If the first message includes information about one second cell, a CC corresponding to the second cell is different from a CC corresponding to the first cell. For example, the first cell corresponds to CC 1=2.1 GHz, and the second cell corresponds to CC 2=3.5 GHz.

If the first message includes information about a plurality of second cells, a CC corresponding to each of the plurality of second cells is different from a CC corresponding to the first cell, and CCs corresponding to different second cells are also different. For example, the first message includes two second cells, where one second cell corresponds to CC 2=3.5 GHz, and the other second cell corresponds to CC 3=28 GHz.

It may be understood that, when the first message includes information about the plurality of second cells, method steps performed for each second cell are the same as method steps performed for one second cell. The following uses an example in which the first message includes information about one second cell for detailed description.

Specifically, the first cell corresponds to the first CC, the second cell corresponds to a second CC, and the first CC is different from the second CC.

The first cell and the second cell may be distributed in a same network device, or may be distributed in different network devices. This is not limited in this application.

In this embodiment of this application, the information about the second cell may include any one or more of the following.

(1) CC information of the second cell, in other words, is frequency information corresponding to the second CC, for example, a center frequency location of the second cell corresponding to the second CC. The terminal device may perform, based on the frequency information corresponding to the second CC, cell search and synchronization on the cell corresponding to the second CC.

(2) A cell identifier of the second cell, in other words, is a cell identifier corresponding to the second CC. The terminal device may identify, based on the CC information of the second cell, the cell corresponding to the second CC, that is, the second cell.

In a possible implementation, the information about the second cell further includes information related to camping on and accessing the second cell, for example, includes any one or more of the following.

(3) Downlink reference signal information of the second cell, in other words, is second downlink reference signal information, to be specific, a resource location of a downlink reference signal corresponding to the second CC, for example, information such as a synchronization signal block (Synchronization Signal Block, SSB) and a channel state information-reference signal (Channel State Information Reference Signal, CSI-RS). The terminal device may obtain signal quality of the second cell based on the second downlink reference signal information, for example, reference signal received power (Reference Signal Receiving Power, RSRP) or reference signal received quality (Reference Signal Receiving Quality, RSRQ) of the second cell.

(4) A signal quality threshold of the second cell, in other words, is a second signal quality threshold, for example, an RSRP threshold or an RSRQ threshold of the second cell. The terminal device may perform determining based on the second signal quality threshold and signal quality of a second downlink reference signal. For a specific determining process, refer to related descriptions in S603 below.

(5) Resource allocation information of the second cell, for example, second random access resource information, in other words, is information about random access resource allocation of the second cell corresponding to the second CC, for example, an available Preamble and a PRACH resource. The terminal device may perform, based on the second random access resource information, random access in the second cell corresponding to the second CC.

In another possible implementation, the information about the second cell does not include information related to camping on and accessing the second cell. The terminal device searches for the system message of the second cell based on the CC information and/or the cell identifier of the second cell, and reads the information related to camping on and accessing the second cell from the found system message, for example, reads one or more of the downlink reference signal information of the second cell, the signal quality threshold of the second cell, or the resource allocation information of the second cell, from the system message.

Further, in this embodiment of this application, the first message may be the system message, or may be dedicated signaling. This is not limited in this embodiment of this application. The following lists several possible implementations.

Manner 1: The first message is a broadcast message, for example, a system information block (System Information Block, SIB).

For example, the terminal device searches for the broadcast message before initiating a random access process, and obtains the information about the second cell from the broadcast message.

Optionally, after receiving the first message, the terminal may first not perform cell measurement based on the first message, but perform cell measurement based on the first message when the terminal requests an RRC establishment process, a re-establishment process, or a resume process, or perform cell measurement based on the first message when the terminal requests to send data, for example, perform measurement on reference signals of the first cell or the first CC and the second cell or the second CC. In this way, the terminal device may not need to periodically perform measurement, but perform measurement when required, so that power consumption of the terminal device can be reduced.

Manner 2: The first message is RRC dedicated information, for example, an RRC setup message, an RRC release message, or an RRC resume message. The first message may alternatively be a MAC layer message.

Manner 3: The first message is a RAR message. This manner may be applied to a four-step random access process.

Manner 4: The first message is MsgB. This manner may be applied to a two-step random access process.

Based on the foregoing manners 1, 2, 3, and 4, the first message may be multiplexed with the system message, or may be multiplexed with a message in an RRC connection establishment process, an RRC re-establishment process, or an RRC resume process. No additional overhead resource is required for first message transmission. This can improve system resource utilization and reduce power consumption of the terminal device.

Optionally, if the first message is an RRC message, after the terminal device camps on the first cell and before the terminal device receives the first message from the network device, the terminal device further needs to send a fourth message to the network device. The fourth message is for initiating the RRC connection establishment process, the RRC re-establishment process, or the RRC resume process.

Optionally, if the first message is the RAR in the four-step random access process, the fourth message is a Preamble message in the four-step random access process and is for initiating the random access process.

Optionally, if the first message is MsgB in the two-step random access process, the fourth message is MsgA in the two-step random access process and is for requesting the RRC establishment process, the re-establishment process, the resume process, or the like. For a specific implementation of MsgA, refer to related descriptions in the foregoing two-step random access. Details are not described herein again.

Optionally, if the fourth message includes user plane data, the fourth message is further for requesting user plane data transmission.

It should be understood that if the first cell and the second cell are distributed in a same network device, the network device in S602 is a network device corresponding to the first cell and the second cell. If the first cell and the second cell are distributed in different network devices, the network device in S602 is a network device corresponding to the first cell (for example, a first network device).

S603: The terminal device sends a second message to the network device, and the network device receives the second message from the terminal device.

The second message may be an RRC message, for example, an RRC setup request (RRC Setup Request) message, and is used by a terminal device in an RRC idle mode to request to establish an RRC connection. The second message may alternatively be an RRC resume request (RRC Resume Request) message, and is used by a terminal device in an RRC inactive mode to request to resume RRC establishment. The second message may alternatively be a MAC message, for example, a MAC control element (control element, CE).

After receiving the first message from the network device, and before sending the second message to the network device, the terminal device further performs signal measurement on the second cell, to obtain the signal quality of the second cell, for example, measures RSRP, RSRQ, or the like of the second cell based on the second downlink reference signal information. The signal measurement herein may be measurement at a physical layer. In other words, a reference signal is measured at a physical layer, and processing at an RRC layer is not required (for example, a filtering operation does not need to be performed). Therefore, the measurement is simpler, measurement efficiency can be improved, and power consumption of the terminal device can be reduced.

In this embodiment of this application, the second message indicates the first cell and/or the second cell, or the second message includes measurement information of the first cell and/or the second cell. Specific content of the second message is different depending on whether the terminal device performs, after receiving the first message from the network device and before sending the second message to the network device, an operation of determining whether the terminal device can camp on the second cell.

Case A: After receiving the first message from the network device and before sending the second message to the network device, the terminal device determines, based on the information about the second cell in S602, whether the terminal device can camp on the second cell. In this case, the second message indicates the first cell and/or the second cell, to be specific, the first cell and/or the second cell indicated by the second message are/is a cell on which the terminal device can camp. For example, the second message includes CC information and/or a cell identifier of the first cell, and/or the CC information and/or the cell identifier of the second cell. Optionally, the second message may further include the measurement information of the first cell and/or the second cell, for example, signal quality information of a downlink reference signal of the first cell and/or a downlink reference signal of the second cell.

It may be understood that, because the terminal device has camped on the first cell in S601 (in other words, has performed a determining operation on the first cell before S601), the determining operation does not need to be separately performed on the first cell herein again, that is, the terminal device has learned that the terminal device can camp on the first cell. Certainly, herein, the terminal device may alternatively perform camping determining on the first cell again. This is not limited in this application.

A specific method for determining, by the terminal device based on the information about the second cell, whether the terminal device can camp on the second cell includes but is not limited to the following four types.

In a first method, if signal quality of a downlink reference signal of the second cell is higher than or equal to the signal quality threshold of the second cell, the terminal device can camp on the second cell, or if signal quality of a downlink reference signal of the second cell is lower than the signal quality threshold of the second cell, the terminal device cannot camp on the second cell.

In a second method, if signal quality of a downlink reference signal of the second cell is higher than or equal to a sum of the signal quality threshold of the second cell and an offset value, the terminal device can camp on the second cell, or if signal quality of a downlink reference signal of the second cell is lower than a sum of the signal quality threshold of the second cell and an offset value, the terminal device cannot camp on the second cell.

In a third method, if signal quality of a downlink reference signal of the second cell is higher than the signal quality threshold of the second cell, the terminal device can camp on the second cell, or if signal quality of a downlink reference signal of the second cell is lower than or equal to the signal quality threshold of the second cell, the terminal device cannot camp on the second cell.

In a fourth method, if signal quality of a downlink reference signal of the second cell is higher than a sum of the signal quality threshold of the second cell and an offset value, the terminal device can camp on the second cell, or if signal quality of a downlink reference signal of the second cell is lower than or equal to a sum of the signal quality threshold of the second cell and an offset value, the terminal device cannot camp on the second cell.

Optionally, the offset value may be obtained through the system message, or may be a default value in a protocol, which is not specified herein.

Case B: After receiving the first message from the network device and before sending the second message to the network device, the terminal device does not determine whether the terminal device can camp on the second cell. In this case, the second message includes the measurement information of the first cell and/or the second cell, for example, signal quality information of a downlink reference signal of the first cell and/or a downlink reference signal of the second cell. The network device performs an operation of determining whether the terminal device can camp on the second cell.

Further, in this embodiment of this application, the terminal device may send the second message to the network device based on a resource of the first cell, or may send the second message to the network device based on a resource of the second cell. This is not limited herein.

It should be understood that, in FIG. 6, S603A indicates that the terminal device sends the second message to the network device based on the resource of the first cell (manner A), and S603B indicates that the terminal device sends the second message to the network device based on the resource of the second cell (manner B).

Further, the terminal device may determine, based on a resource idleness/sufficiency status, whether to use the resource of the first cell or the resource of the second cell. For example, when there are more idle resources in the first cell, the resource of the first cell may be used to send the second message. If the resource of the first cell is insufficient, the resource of the second cell may be used to send the second message.

A scenario in which the terminal device sends the second message to the network device based on the resource of the second cell may be understood as that the terminal device virtually camps on the second cell. In other words, the terminal device actually does not camp on the second cell, but can use the resource of the second cell.

Optionally, the second message is used in a random access process.

It may be understood that the random access process herein may be a two-step random access process, or may be a four-step random access process. This is not limited in this application. If the process is a two-step random access process, the second message may be specifically MsgA. If the process is a four-step random access process, the second message may be Msg3. If the second message herein is MsgA in the two-step random access process, the first message may be a broadcast message. If the second message herein is Msg3 in the four-step random access process, the first message may be a RAR.

After the terminal device camps on the first cell in S601, once a service transmission requirement occurs, the terminal device needs to initiate a random access process to the network device (for the first cell), to switch an RRC mode from an RRC idle mode or an RRC inactive mode to an RRC connected mode, and then can perform service transmission. In this implementation, the second message may be multiplexed with a message in the random access process. In this way, the terminal does not need to transmit the second message by using an additional overhead resource.

Specifically, the terminal device may send the second message to the network device based on a random access resource of the first cell or a random access resource of the second cell.

When the network device sends the second message to the network device based on the resource of the first cell, the second message includes any one or more of the following: the CC information of the second cell, the cell identifier of the second cell, and the signal quality information of the downlink reference signal of the second cell.

Optionally, the second message may further include any one or more of the following: the CC information of the first cell, the cell identifier of the first cell, and the signal quality information of the downlink reference signal of the first cell. Alternatively, the second message may not include information such as the CC information of the first cell, the cell identifier of the first cell, and the signal quality information of the downlink reference signal of the first cell. Instead, the network device determines, based on that the terminal device accesses the first cell, that the terminal device currently camps on the first cell. Therefore, the terminal device can definitely camp on the first cell.

When the network device sends the second message to the network device based on the resource of the second cell, the second message includes any one or more of the following: the CC information of the first cell, the cell identifier of the first cell, and the signal quality information of the downlink reference signal of the first cell.

Optionally, the second message may further include any one or more of the following: the CC information of the second cell, the cell identifier of the second cell, and the signal quality information of the downlink reference signal of the second cell.

Alternatively, the second message may not include information such as the CC information of the second cell, the cell identifier of the second cell, and the signal quality information of the downlink reference signal of the second cell. Instead, the network device determines, based on that the terminal device accesses the second cell, that the terminal device can camp on the second cell.

It should be understood that if the first cell and the second cell are distributed in a same network device, the network device in S603 is a network device corresponding to the first cell and the second cell. The network device determines, based on the second message, that a cell on which the terminal device camps is a third cell, where the third cell is one of the first cell and the second cell. For example, the network device may preferentially select, based on the signal quality information of the first cell and the second cell, a cell with better signal quality as the third cell, to ensure communication quality of the terminal device; or the network device may preferentially select, based on load information of the first cell and the second cell, a cell with light load as the third cell, to balance load between cells. Certainly, there may be another implementation. This is not limited herein.

If the first cell and the second cell are distributed in different network devices, the network device in S603 may be a network device corresponding to the first cell (for example, the first network device). After determining, based on the second message, that a cell on which the terminal device camps is the third cell, the first network device notifies a second network device of a decision result (the third cell), or the first network device forwards the second message to a second network device, and the second network device determines, through decision-making, the third cell and notifies the first network device of a decision result. Certainly, the network device in S603 may alternatively be a network device corresponding to the second cell (for example, the second network device). To be specific, the second network device determines, based on the second message, that a cell on which the terminal device camps is the third cell.

S604: The network device sends a third message to the terminal device, and the terminal device receives the third message from the network device.

If the terminal device sends the second message to the network device based on the resource of the first cell in S603, the network device sends the third message to the terminal device based on the resource of the first cell herein. In FIG. 6, S604A indicates that the network device sends the third message to the terminal device based on the resource of the first cell (manner A). If the terminal device sends the second message to the network device based on the resource of the second cell in S603, the network device sends the third message to the terminal device based on the resource of the second cell herein. In FIG. 6, S604B indicates that the network device sends the third message to the terminal device based on the resource of the second cell (manner B).

The third message may be an RRC message, for example, an RRC setup request message, and is used by a terminal device in an RRC idle mode to request to establish an RRC connection. The third message may alternatively be an RRC resume request message, and is used by a terminal device in an RRC inactive mode to request to resume RRC establishment. The third message may alternatively be a MAC message, for example, a MAC CE.

It should be understood that if the first cell and the second cell are distributed in a same network device, the network device in S604 is a network device corresponding to the first cell and the second cell. If the first cell and the second cell are distributed in different network devices, the network device in S604 is a network device corresponding to the second cell (that is, the second network device).

S605: The terminal device determines, based on the third message, that the terminal device camps on the third cell, where the third cell is one of the first cell and the second cell.

Specifically, the third message includes at least one type of the following information.

(1) CC information of the third cell is a serving frequency of the third cell, and the terminal device determines a frequency of a primary cell based on the CC information of the third cell. The CC information of the third cell is the CC information of the first cell or the CC information of the second cell.

(2) Cell identifier of the third cell: The terminal device determines, based on the cell identifier of the third cell, that the third cell is a primary cell or a serving cell. The cell identifier of the third cell is the cell identifier of the first cell or the cell identifier of the second cell.

In this embodiment of this application, when the terminal device in the RRC idle mode or the RRC inactive mode camps on the first cell, the terminal device may notify the network device of a cell on which the terminal device can camp (that is, the second message indicates the first cell and/or the second cell), or notify the network device of the measurement information of the first cell and/or the second cell (that is, the second message includes the measurement information of the first cell and/or the second cell), so that the network device can select, based on an overall load status of a network, a cell for the terminal device to camp on, to ensure network load balancing between different cells. In addition, in this process, the terminal device does not need to perform RRC redirection, to be specific, does not need to return from an RRC connected mode to an RRC idle mode. Therefore, service interruption of the terminal device caused by RRC redirection can be avoided. In addition, when a quantity of terminal devices in a cell (for example, the first cell) on which the terminal device currently camps is excessively large, the terminal device may initiate random access in a cell (for example, the second cell) on which the terminal device virtually camps, to alleviate random access resource insufficiency in the first cell.

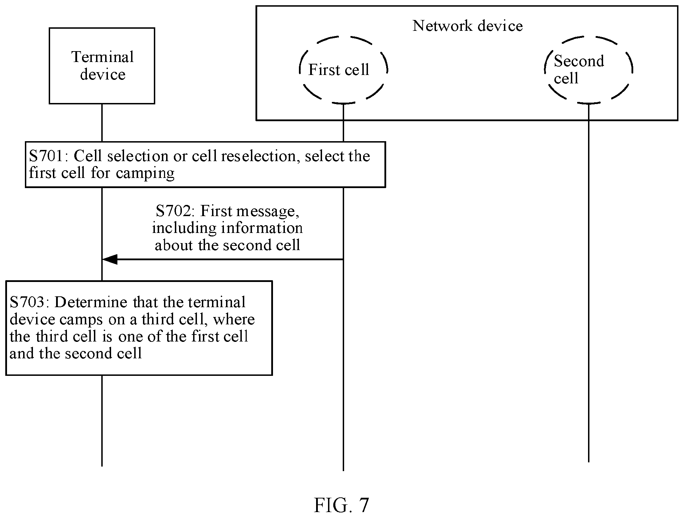

FIG. 7 shows another cell handover method according to an embodiment of this application. In the following description process, an example in which the method is applied to the scenario shown in FIG. 1 and one cell corresponds to one CC is used.

S701: A terminal device performs cell selection or cell reselection, and selects a first cell corresponding to a first CC to camp on.

For a specific implementation of S701, refer to the foregoing S601. Details are not described herein again.

S702: After the terminal device camps on the first cell, a network device sends a first message to the terminal device, and the terminal device receives the first message from the network device.

For a specific implementation of S702, refer to the foregoing S602. Details are not described herein again.

Herein, an example in which the first message includes information about one second cell is used, and an example in which the first cell corresponds to the first CC, the second cell corresponds to a second CC, and the first CC and the second CC are different is used.

S703: The terminal device determines that the terminal device camps on a third cell, where the third cell is one of the first cell and the second cell.

In a possible implementation, if the terminal device obtains a signal quality threshold of the second cell in S702 (for example, the first message carries the signal quality threshold of the second cell, and the terminal device reads the signal quality threshold of the second cell from the first message; or for example, the first message carries only CC information and/or a cell identifier of the second cell and does not carry the signal quality threshold of the second cell, and the terminal device reads the CC information and/or the cell identifier of the second cell from the first message and searches for a system message of the second cell based on the CC information and/or the cell identifier of the second cell, and reads the signal quality threshold of the second cell from the found system message), that the terminal device determines that the terminal device camps on the third cell includes:

if signal quality of a downlink reference signal of the second cell is higher than or equal to the signal quality threshold of the second cell, determining that the terminal device camps on the second cell; or

if signal quality of a downlink reference signal of the second cell is higher than or equal to a sum of the signal quality threshold of the second cell and an offset value, determining that the terminal device camps on the second cell; or

if signal quality of a downlink reference signal of the second cell is higher than or equal to the signal quality threshold of the second cell, determining, according to a preset criterion, that the terminal device camps on the first cell or the second cell; or

if signal quality of a downlink reference signal of the second cell is higher than or equal to a sum of the signal quality threshold of the second cell and an offset value, determining, according to a preset criterion, that the terminal device camps on the first cell or the second cell.

The preset criterion may be randomly selecting the first cell or the second cell for camping, or selecting a cell with a higher priority in the first cell and the second cell for camping. Alternatively, the third cell is selected in another manner. This is not limited herein.

In another possible implementation, if the terminal device does not obtain the signal quality threshold of the second cell in S702, that the terminal device determines that the terminal device camps on the third cell includes:

if signal quality of a downlink reference signal of the first cell is higher than or equal to signal quality of a downlink reference signal of the second cell, determining that the terminal device camps on the first cell; or

if signal quality of a downlink reference signal of the first cell is lower than signal quality of a downlink reference signal of the second cell, determining that the terminal device camps on the second cell; or

if signal quality of a downlink reference signal of the first cell is higher than signal quality of a downlink reference signal of the second cell, determining that the terminal device camps on the first cell; or

if signal quality of a downlink reference signal of the first cell is lower than or equal to signal quality of a downlink reference signal of the second cell, determining that the terminal device camps on the second cell.

It can be learned from the foregoing descriptions that when a terminal device in an RRC idle mode or an RRC inactive mode camps on the first cell, the terminal device can obtain the information about the second cell only by receiving an indication from a network side to perform physical layer measurement. The terminal device does not need to periodically perform inter-frequency measurement. This can reduce power consumption of the terminal device. After the terminal device obtains the information about the second cell, the terminal device directly determines, through decision-making, a cell to be camped on, and does not need to notify the network device. This is easy to be implemented, so that system overheads can be further reduced and power consumption of the terminal device can be reduced.

It should be noted that in the embodiment shown in FIG. 6 or FIG. 7, an example in which one cell corresponds to one CC is used to describe the method for selecting a cell for camping by the terminal device. Therefore, "selecting a cell" is equivalent to "selecting a CC". However, during actual application, one cell may alternatively correspond to a plurality of CCs. In this case, after the terminal device selects a cell for camping, the terminal device further needs to select one CC from a plurality of CCs corresponding to the cell for camping. It should be understood that the technical concept of the embodiment shown in FIG. 6 or FIG. 7 is also applicable to a case in which one cell corresponds to a plurality of CCs.

The following uses an example in which the technical concept of the embodiment shown in FIG. 6 is applied to a scenario in which one cell corresponds to a plurality of CCs for description.

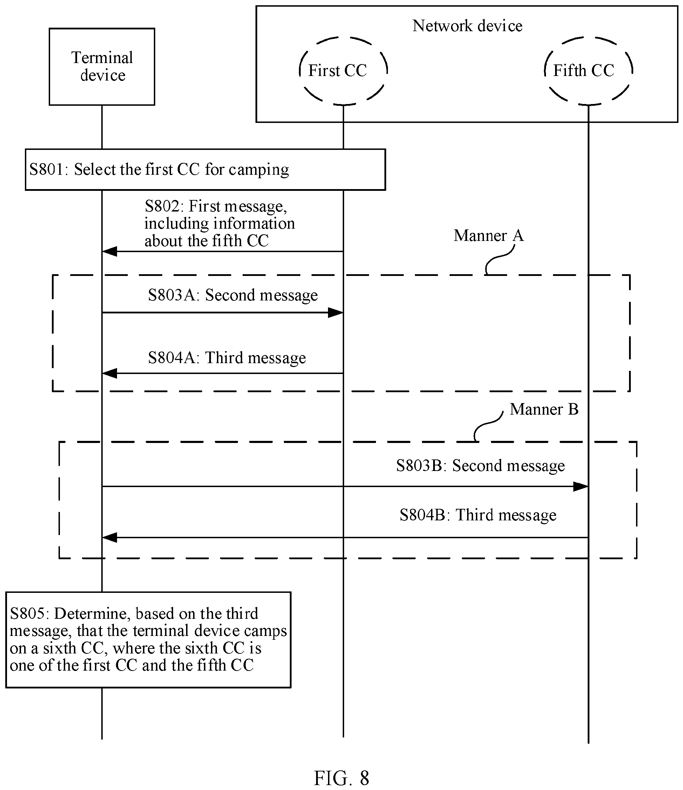

FIG. 8 shows a CC camping method according to an embodiment of this application. In the following description process, an example in which the method is applied to the scenario shown in FIG. 1 and one cell corresponds to a plurality of CCs is used.

S801: A terminal device selects a first CC for camping.

The first CC corresponds to a first cell, where the first cell corresponds to a plurality of CCs.

In a possible manner, after the terminal device performs cell selection or reselection to camp on the first cell, the terminal device may select, based on measurement results of the plurality of CCs of the cell, a CC in a good signal status to camp on, or the terminal device selects, according to a preconfigured rule, a CC to camp on.

For example, the CCs corresponding to the first cell include the first CC and a fourth CC, where the first CC may be a CC with a low frequency in the plurality of CCs or a default CC indicated by a system. If RSRP of the first CC is higher than a preconfigured threshold, the first CC is selected for camping, otherwise, the fourth CC is selected for camping.

In another possible manner, the first cell may enable only one CC (in other words, activate only one CC) by default. After the terminal device performs cell selection or reselection to camp on the first cell, the terminal device automatically camps on the enabled CC.

For example, the first cell enables only the first CC, and temporarily, the fourth CC is not activated. The terminal device performs cell selection or reselection to camp on the first CC. A network device may activate the fourth CC after detecting that the terminal device attempts to access the network device. For example, the network device may activate the fourth CC only after detecting an RAP, MsgA, or an uplink reference signal initiated by the terminal device. In this case, the terminal device automatically camps on the first CC after performing cell selection or reselection.

Certainly, in this embodiment, the first cell may alternatively correspond to one CC. In this case, for a specific implementation of S801, refer to the specific implementation of S601. Details are not described herein again.

S802: After the terminal device camps on the first CC, the network device sends a first message to the terminal device, and the terminal device receives the first message from the network device.

The first message includes information about one or more CCs. This is not limited in this application. When the first message includes information about a plurality of CCs, different CCs in the plurality of CCs may correspond to a same cell. For example, the first message includes information about a second CC and a third CC, and both the second CC and the third CC correspond to a second cell. Different CCs in the plurality of CCs may alternatively correspond to different cells. For example, the second CC corresponds to the second cell, and the third CC corresponds to a third cell. This is not limited herein. Optionally, the first message may further include another CC that is in the plurality of CCs corresponding to the first cell and other than the first CC. For example, the first message further includes the fourth CC. The fourth CC corresponds to the first cell. The fourth CC is different from the first CC.

It may be understood that, in a case in which the first message includes information about a plurality of CCs, method steps performed for each CC are the same as method steps performed for one CC. The following uses an example in which the first message includes information about one fifth CC for detailed description. The fifth CC is different from the first CC. A cell corresponding to the fifth CC is different from or the same as the first cell. For example, the fifth CC may be the second CC, the third CC, or the fourth CC.

In this embodiment of this application, the information about the fifth CC may include any one or more of the following:

(1) CC information of the fifth CC, in other words, frequency information corresponding to the fifth CC, for example, a center frequency location corresponding to the fifth CC;
(2) an identifier of the fifth CC, in other words, an identifier corresponding to the fifth CC;
(3) downlink reference signal information of the fifth CC;
(4) a signal quality threshold of the fifth CC, in other words, a fifth signal quality threshold; and
(5) resource allocation information of the fifth CC.

The method steps performed for the fifth CC herein are the same as the method steps performed for the second cell in S602. Therefore, for a specific implementation of S802, refer to the specific implementation in S602. For example, for a message type of the first message, a resource carrying the first message, an occasion for sending the first message, and the like, refer to related descriptions in S602. Details are not described herein again.

S803: The terminal device sends a second message to the network device, and the network device receives the second message from the terminal device.

In this embodiment of this application, the second message indicates the first CC and/or the fifth CC, or the second message includes measurement information of the first CC and/or the fifth CC. Specific content of the second message may be different depending on whether the terminal device performs, after receiving the first message from the network device and before sending the second message to the network device, an operation of determining whether the terminal device can camp on the fifth CC.

The method steps performed for the fifth CC herein are the same as the method steps performed for the second cell in S603. Therefore, for a specific implementation of S803, refer to the specific implementation in S603.

Optionally, for a message type of the second message, a resource carrying the second message, an occasion for sending the second message, and the like, refer to related descriptions in S603. Details are not described herein again.

Optionally, as shown in FIG. 8, the second message may be sent to the first CC (that is, S803A in manner A), or may be sent to the fifth CC (that is, S803B in manner B).

S804: The network device sends a third message to the terminal device, and the terminal device receives the third message from the network device.

The third message includes at least one type of the following information.

(1) Information about a sixth CC is frequency information corresponding to the sixth CC, for example, a center frequency location corresponding to the sixth CC. The information about the sixth CC may be information about the first CC or the information about the fifth CC.

(2) An identifier of the sixth CC is an identifier corresponding to the sixth CC. The identifier of the sixth CC may be the identifier of the fifth CC or an identifier of the first CC.

The sixth CC is one of the first CC and the fifth CC.

The method steps performed for the sixth CC herein are the same as the method steps performed for the third cell in S604. Therefore, for a specific implementation of S804, refer to the specific implementation in S604. For example, for a message type of the third message, a resource carrying the third message, an occasion for sending the third message, and the like, refer to related descriptions in S604. Details are not described herein again.

For example, as shown in FIG. 8, the third message may be from the first CC (that is, S804A in manner A), or may be from the fifth CC (that is, S804B in manner B).

S805: The terminal device determines, based on the third message, that the terminal device camps on the sixth CC, where the sixth CC is one of the first CC and the fifth CC.

In this embodiment of this application, when a terminal device in an RRC idle mode or an RRC inactive mode camps on the first CC, the terminal device may notify the network device of a CC on which the terminal device can camp (that is, the second message indicates the first CC and/or the fifth CC), or notify the network device of the measurement information of the first CC and/or the fifth CC (that is, the second message includes the measurement information of the first CC and/or the fifth CC), so that the network device can select, based on an overall load status of a network, a CC for the terminal device to camp on, to ensure network load balancing between different CCs. In addition, in this process, the terminal device does not need to perform RRC redirection, to be specific, does not need to return from an RRC connected mode to an RRC idle mode. Therefore, service interruption of the terminal device caused by RRC redirection can be avoided. In addition, when a quantity of terminal devices in a CC (for example, the first CC) on which the terminal device currently camps is excessively large, the terminal device may initiate random access in a CC (for example, the fifth CC) on which the terminal device virtually camps, to alleviate random access resource insufficiency in the first CC.

It should be understood that the foregoing embodiment shown in FIG. 8 is described by using an example in which the technical concept of the embodiment shown in FIG. 6 is applied to a scenario in which one cell corresponds to a plurality of CCs. Similarly, the technical concept of the embodiment shown in FIG. 7 can also be applied to a scenario in which one cell corresponds to a plurality of CCs. A specific implementation method of this scenario is different from that of the embodiment shown in FIG. 8 only in that, after S801 and S802 are performed, the terminal device determines, through decision-making, a CC to camp on, and does not need to notify the network device.

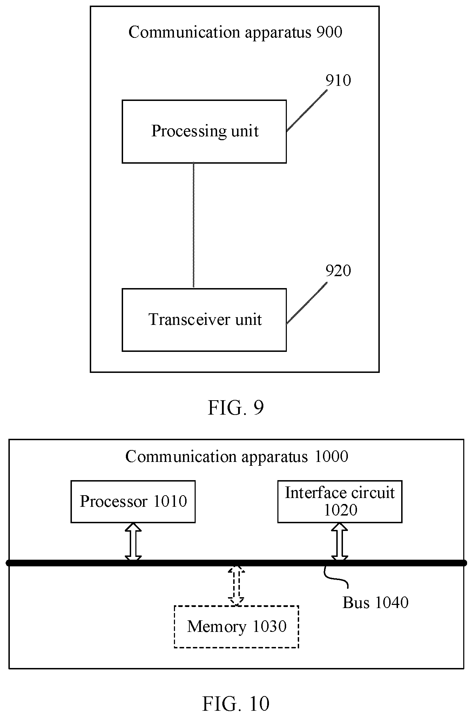

The foregoing describes the method provided in embodiments of this application with reference to FIG. 6 to FIG. 8. The following describes apparatuses provided in embodiments of this application with reference to FIG. 9 and FIG. 10.

It may be understood that, to implement the functions in the foregoing embodiments, a network device and a terminal device include corresponding hardware structures and/or software modules for performing the functions. A person skilled in the art should easily be aware that, in combination with the units and the method steps in the examples described in embodiments disclosed in this application, this application can be implemented by hardware, software, or a combination of hardware and software. Whether a function is performed by hardware, software, or hardware driven by computer software depends on particular application scenarios and design constraints of the technical solutions.

FIG. 9 and FIG. 10 are schematic diagrams of possible structures of communication apparatuses according to embodiments of this application. The communication apparatuses may be configured to implement the functions of the terminal device or the network device in the foregoing method embodiments. Therefore, beneficial effects of the foregoing method embodiments can also be implemented. In embodiments of this application, the communication apparatus may be the terminal device shown in FIG. 1, the network device shown in FIG. 1, or a module (for example, a chip) applied to a terminal device or a network device.

As shown in FIG. 9, a communication apparatus 900 includes a processing unit 910 and a transceiver unit 920. Optionally, the transceiver unit 920 may be further divided into a receiving unit and a sending unit.

The communication apparatus 900 is configured to implement the functions of the terminal device or the network device in the method embodiments shown in FIG. 6 to FIG. 8.

When the communication apparatus 900 is configured to implement the functions of the terminal device in the method embodiment shown in FIG. 6, the transceiver unit 920 may be configured to: after the terminal device camps on a first cell, receive a first message from a network device, where the first message includes information about a second cell, the first cell corresponds to a first CC, and the second cell corresponds to a second CC. The transceiver unit 920 is further configured to send a second message to the network device, where the second message indicates the first cell and/or the second cell, or the second message includes measurement information of the first cell and/or the second cell. The transceiver unit 920 is further configured to receive a third message from the network device. The processing unit 910 may be configured to determine, based on the third message, that the terminal device camps on a third cell, where the third cell is one of the first cell and the second cell.

When the communication apparatus 900 is configured to implement the functions of the network device in the method embodiment shown in FIG. 6, the transceiver unit 920 may be configured to: after a terminal device camps on a first cell, send a first message to the terminal device, where the first message includes information about a second cell, the first cell corresponds to a first CC, and the second cell corresponds to a second CC. The transceiver unit 920 is further configured to receive a second message from the terminal device, where the second message indicates the first cell and/or the second cell, or the second message includes measurement information of the first cell and/or the second cell. The transceiver unit 920 is further configured to send a third message to the terminal device, where the third message indicates the terminal device to camp on a third cell, and the third cell is one of the first cell and the second cell. The processing unit 910 may be configured to generate the first message and the third message.

When the communication apparatus 900 is configured to implement the functions of the terminal device in the method embodiment shown in FIG. 7, the transceiver unit 920 may be configured to: after the terminal device camps on a first cell, receive a first message from a network device, where the first message includes information about a second cell. The processing unit 910 may be configured to determine that the terminal device camps on a third cell, where the third cell is one of the first cell and the second cell.

When the communication apparatus 900 is configured to implement the functions of the network device in the method embodiment shown in FIG. 7, the processing unit 910 may be configured to generate a first message. The transceiver unit 920 may be configured to: after a terminal device camps on a first cell, send the first message to the terminal device, where the first message includes information about a second cell, the first cell corresponds to a first CC, and the second cell corresponds to a second CC.

When the communication apparatus 900 is configured to implement the functions of the terminal device in the method embodiment shown in FIG. 8, the transceiver unit 920 may be configured to: after the terminal device camps on a first CC, receive a first message from a network device, where the first message includes information about a fifth CC. The transceiver unit 920 is further configured to send a second message to the network device, where the second message indicates the first CC and/or the fifth CC, or the second message includes measurement information of the first CC and/or the fifth CC. The transceiver unit 920 is further configured to receive a third message from the network device. The processing unit 910 may be configured to determine, based on the third message, that the terminal device camps on a sixth CC, where the sixth CC is one of the first CC and the fifth CC.

When the communication apparatus 900 is configured to implement the functions of the network device in the method embodiment shown in FIG. 8, the transceiver unit 920 may be configured to: after a terminal device camps on a first CC, send a first message to the terminal device, where the first message includes information about a fifth CC. The transceiver unit 920 is further configured to receive a second message from the terminal device, where the second message indicates the first CC and/or the fifth CC, or the second message includes measurement information of the first CC and/or the fifth CC. The transceiver unit 920 is further configured to send a third message to the terminal device, where the third message indicates the terminal device to camp on a sixth CC, and the sixth CC is one of the first CC and the fifth CC. The processing unit 910 may be configured to generate the first message and the third message.

For more detailed descriptions of the processing unit 910 and the transceiver unit 920, directly refer to related descriptions in the method embodiments shown in FIG. 6 to FIG. 8. Details are not described herein again.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to store instructions executed by the processor 1010, input data required for running instructions by the processor 1010, or data generated after the processor 1010 runs instructions.

When the communication apparatus 1000 is configured to implement the methods shown in FIG. 6 to FIG. 8, the processor 1010 is configured to implement the functions of the processing unit 910, and the interface circuit 1020 is configured to implement the functions of the transceiver unit 920.

When the communication apparatus is a chip applied to a terminal device, the chip in the terminal device implements functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip applied to a network device, the chip in the network device implements functions of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

In this embodiment of this application, a specific connection medium between the processor 1010, the memory 1030, and the interface circuit 1020 is not limited. In this embodiment of this application, the processor 1010, the memory 1030, and the interface circuit 1020 are connected to each other through a bus 1040 in FIG. 10. The bus is represented by a thick line in FIG. 10. A connection manner between other components is merely an example for description, and is not limited thereto. Buses may be classified into an address bus, a data bus, a control bus, and the like. For ease of representation, only one thick line is for representing the bus in FIG. 10, but this does not mean that there is only one bus or only one type of bus.

It should be understood that the processor mentioned in embodiments of this application may be implemented by hardware or may be implemented by software. When the processor is implemented by using hardware, the processor may be a logic circuit, an integrated circuit, or the like. When the processor is implemented by using software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a discrete gate, a transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example, and not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should be noted that the memory described in this specification aims to include but is not limited to these memories and any memory of another proper type.

Based on a same technical concept, an embodiment of this application further provides a computer-readable storage medium, including a program or instructions. When the program or the instructions are run on a computer, the methods in FIG. 6 to FIG. 8 are enabled to be performed.

Based on a same technical concept, an embodiment of this application further provides a computer program product, including instructions. When the computer program product runs on a computer, the methods in FIG. 6 to FIG. 8 are enabled to be performed.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A cell camping method, wherein the method is applied to a terminal device or a chip in the terminal device, and the method comprises:

   after the terminal device camps on a first cell, receiving a first message from a network device, wherein the first message comprises information about a second cell, the first cell corresponds to a first component carrier CC, and the second cell corresponds to a second CC;
   sending a second message to the network device, wherein the second message indicates the first cell and/or the second cell, or the second message comprises measurement information of the first cell and/or the second cell; and
   receiving a third message from the network device, and determining, based on the third message, that the terminal device camps on a third cell, wherein the third cell is one of the first cell and the second cell.

2. The method according to claim 1, wherein the information about the second cell comprises:

   CC information of the second cell; and/or
   a cell identifier of the second cell.

3. The method according to claim 2, wherein the information about the second cell further comprises any one or more of the following:

   downlink reference signal information of the second cell;
   a signal quality threshold of the second cell; and
   resource allocation information of the second cell.

4. The method according to claim 2, wherein after the receiving a first message from a network device, and before the sending a second message to the network device, the method further comprises:

   searching for a system message of the second cell based on the CC information and/or the cell identifier of the second cell, wherein
   the system message of the second cell comprises any one or more of the following:

      downlink reference signal information of the second cell;
      a signal quality threshold of the second cell; and
      resource allocation information of the second cell.

5. The method according to any one of claims 1 to 4, wherein after the terminal device camps on the first cell, and before the receiving a first message from a network device, the method further comprises:
   sending a fourth message to the network device, wherein the fourth message is for initiating a radio resource control RRC connection establishment process, an RRC re-establishment process, or an RRC resume process.

6. The method according to any one of claims 1 to 5, wherein after the receiving a first message from a network device, and before the sending a second message to the network device, the method further comprises:
   determining, based on the information about the second cell, whether the terminal device can camp on the second cell.

7. The method according to claim 6, wherein the determining, based on the information about the second cell, whether the second cell can be camped on comprises:

   if signal quality of a downlink reference signal of the second cell is higher than or equal to the signal quality threshold of the second cell, the terminal device can camp on the second cell, or
   if signal quality of a downlink reference signal of the second cell is lower than the signal quality threshold of the second cell, the terminal device cannot camp on the second cell; or
if signal quality of a downlink reference signal of the second cell is higher than or equal to a sum of the signal quality threshold of the second cell and an offset value, the terminal device can camp on the second cell, or if signal quality of a downlink reference signal of the second cell is lower than a sum of the signal quality threshold of the second cell and an offset value, the terminal device cannot camp on the second cell.

8. The method according to claim 6, wherein the determining, based on the information about the second cell, whether the second cell can be camped on comprises:

if signal quality of a downlink reference signal of the second cell is higher than the signal quality threshold of the second cell, the terminal device can camp on the second cell, or if signal quality of a downlink reference signal of the second cell is lower than or equal to the signal quality threshold of the second cell, the terminal device cannot camp on the second cell; or
if signal quality of a downlink reference signal of the second cell is higher than a sum of the signal quality threshold of the second cell and an offset value, the terminal device can camp on the second cell, or if signal quality of a downlink reference signal of the second cell is lower than or equal to a sum of the signal quality threshold of the second cell and an offset value, the terminal device cannot camp on the second cell.

9. The method according to any one of claims 1 to 8, wherein the sending a second message to the network device comprises:

sending the second message to the network device based on a resource of the first cell; or
sending the second message to the network device based on a resource of the second cell.

10. The method according to any one of claims 1 to 9, wherein the second message comprises any one or more of the following:

CC information of the first cell;
a cell identifier of the first cell;
signal quality information of a downlink reference signal of the first cell;
the CC information of the second cell;
the cell identifier of the second cell; and
signal quality information of the downlink reference signal of the second cell.

11. A cell camping method, wherein the method is applied to a network device or a chip in the network device, and the method comprises:

after a terminal device camps on a first cell, sending a first message to the terminal device, wherein the first message comprises information about a second cell, the first cell corresponds to a first component carrier CC, and the second cell corresponds to a second CC;
receiving a second message from the terminal device, wherein the second message indicates the first cell and/or the second cell, or the second message comprises measurement information of the first cell and/or the second cell; and
sending a third message to the terminal device, wherein the third message indicates the terminal device to camp on a third cell, and the third cell is one of the first cell and the second cell.

12. The method according to claim 11, wherein the information about the second cell comprises:

CC information of the second cell; and/or
a cell identifier of the second cell.

13. The method according to claim 12, wherein the information about the second cell further comprises any one or more of the following:

downlink reference signal information of the second cell;
a signal quality threshold of the second cell; and
resource allocation information of the second cell.

14. The method according to claim 12, wherein after the sending a first message to the terminal device, and before the receiving a second message from the terminal device, the method further comprises:

sending a system message of the second cell, wherein
the system message of the second cell comprises any one or more of the following:

downlink reference signal information of the second cell;
a signal quality threshold of the second cell; and
resource allocation information of the second cell.

15. The method according to any one of claims 11 to 14, wherein after the terminal device camps on the first cell, and before the sending a first message to the terminal device, the method further comprises:
receiving a fourth message from the terminal device, wherein the fourth message is for initiating a radio resource control RRC connection establishment process, an RRC re-establishment process, or an RRC resume process.

16. The method according to any one of claims 11 to 15, wherein the receiving a second message from the terminal device comprises:

receiving the second message from the terminal device based on a resource of the first cell; or receiving the second message from the terminal device based on a resource of the second cell.

17. The method according to any one of claims 11 to 16, wherein the second message comprises any one or more of the following:

CC information of the first cell;
a cell identifier of the first cell;
signal quality information of a downlink reference signal of the first cell;
the CC information of the second cell;
the cell identifier of the second cell; and
signal quality information of a downlink reference signal of the second cell.

18. An apparatus used in a terminal device, wherein the apparatus comprises:

a receiving unit, configured to: after the terminal device camps on a first cell, receive a first message from a network device, wherein the first message comprises information about a second cell, the first cell corresponds to a first component carrier CC, and the second cell corresponds to a second CC;
a sending unit, configured to send a second message to the network device, wherein the second message indicates the first cell and/or the second cell, or the second message comprises measurement information of the first cell and/or the second cell, wherein the receiving unit is further configured to receive a third message from the network device; and
a processing unit, configured to determine, based on the third message, that the terminal device camps on a third cell, wherein the third cell is one of the first cell and the second cell.

19. The apparatus according to claim 18, wherein the information about the second cell comprises:

CC information of the second cell; and/or
a cell identifier of the second cell.

20. The apparatus according to claim 19, wherein the information about the second cell further comprises any one or more of the following:

downlink reference signal information of the second cell;
a signal quality threshold of the second cell; and
resource allocation information of the second cell.

21. The apparatus according to claim 19, wherein the processing unit is further configured to:

after the receiving unit receives the first message from the network device, and before the sending unit sends the second message to the network device, search for a system message of the second cell based on the CC information and/or the cell identifier of the second cell, wherein
the system message of the second cell comprises any one or more of the following:

downlink reference signal information of the second cell;
a signal quality threshold of the second cell; and
resource allocation information of the second cell.

22. The apparatus according to any one of claims 18 to 21, wherein the sending unit is further configured to: after the terminal device camps on the first cell, and before the receiving unit receives the first message from the network device, send a fourth message to the network device, wherein the fourth message is for initiating a radio resource control RRC connection establishment process, an RRC re-establishment process, or an RRC resume process.

23. The apparatus according to any one of claims 18 to 22, wherein the processing unit is further configured to:
after the receiving unit receives the first message from the network device, and before the sending unit sends the second message to the network device, determine, based on the information about the second cell, whether the terminal device can camp on the second cell.

24. The apparatus according to claim 23, wherein when the processing unit is configured to determine, based on the information about the second cell, whether the second cell can be camped on, the processing unit is specifically configured to:

if signal quality of a downlink reference signal of the second cell is higher than or equal to the signal quality threshold of the second cell, determine that the terminal device can camp on the second cell, or if signal quality of a downlink reference signal of the second cell is lower than the signal quality threshold of the second cell, determine that the terminal device cannot camp on the second cell; or

if signal quality of a downlink reference signal of the second cell is higher than or equal to a sum of the signal quality threshold of the second cell and an offset value, determine that the terminal device can camp on the second cell, or if signal quality of a downlink reference signal of the second cell is lower than a sum of the signal quality threshold of the second cell and an offset value, determine that the terminal device cannot camp on the second cell.

25. The apparatus according to claim 23, wherein when the processing unit is configured to determine, based on the information about the second cell, whether the second cell can be camped on, the processing unit is specifically configured to:

if signal quality of a downlink reference signal of the second cell is higher than the signal quality threshold of the second cell, determine that the terminal device can camp on the second cell, or if signal quality of a downlink reference signal of the second cell is lower than or equal to the signal quality threshold of the second cell, determine that the terminal device cannot camp on the second cell; or

if signal quality of a downlink reference signal of the second cell is higher than a sum of the signal quality threshold of the second cell and an offset value, determine that the terminal device can camp on the second cell, or if signal quality of a downlink reference signal of the second cell is lower than or equal to a sum of the signal quality threshold of the second cell and an offset value, determine that the terminal device cannot camp on the second cell.

26. The apparatus according to any one of claims 18 to 25, wherein when the sending unit is configured to send the second message to the network device, the sending unit is specifically configured to:

send the second message to the network device based on a resource of the first cell; or send the second message to the network device based on a resource of the second cell.

27. The apparatus according to any one of claims 18 to 26, wherein the second message comprises any one or more of the following:

CC information of the first cell; a cell identifier of the first cell; signal quality information of a downlink reference signal of the first cell;

the CC information of the second cell; the cell identifier of the second cell; and signal quality information of the downlink reference signal of the second cell.

28. An apparatus used in a network device, wherein the apparatus comprises:

a sending unit, configured to: after a terminal device camps on a first cell, send a first message to the terminal device, wherein the first message comprises information about a second cell, the first cell corresponds to a first component carrier CC, and the second cell corresponds to a second CC; and

a receiving unit, configured to receive a second message from the terminal device, wherein the second message indicates the first cell and/or the second cell, or the second message comprises measurement information of the first cell and/or the second cell, wherein

the sending unit is further configured to send a third message to the terminal device, wherein the third message indicates the terminal device to camp on a third cell, and the third cell is one of the first cell and the second cell.

29. The apparatus according to claim 28, wherein the information about the second cell comprises:

CC information of the second cell; and/or a cell identifier of the second cell.

30. The apparatus according to claim 29, wherein the information about the second cell further comprises any one or more of the following:

downlink reference signal information of the second cell; a signal quality threshold of the second cell; and resource allocation information of the second cell.

31. The apparatus according to claim 29, wherein the sending unit is further configured to:

after the sending unit sends the first message to the terminal device, and before the receiving unit receives the second message from the terminal device, send a system message of the second cell, wherein

the system message of the second cell comprises any one or more of the following:

downlink reference signal information of the second cell; a signal quality threshold of the second cell; and

resource allocation information of the second cell.

32. The apparatus according to any one of claims 28 to 31, wherein the receiving unit is further configured to: after the terminal device camps on the first cell, and before the sending unit sends the first message to the terminal device, receive a fourth message from the terminal device, wherein the fourth message is for initiating a radio resource control RRC connection establishment process, an RRC re-establishment process, or an RRC resume process.

33. The apparatus according to any one of claims 28 to 32, wherein when the receiving unit is configured to receive the second message from the terminal device, the receiving unit is specifically configured to:

receive the second message from the terminal device based on a resource of the first cell; or receive the second message from the terminal device based on a resource of the second cell.

34. The apparatus according to any one of claims 28 to 33, wherein the second message comprises any one or more of the following:

CC information of the first cell;
a cell identifier of the first cell;
signal quality information of a downlink reference signal of the first cell;
the CC information of the second cell;
the cell identifier of the second cell; and
signal quality information of a downlink reference signal of the second cell.

35. A communication apparatus, comprising a processor and a memory, wherein the processor is coupled to the memory, and the processor is configured to implement the method according to any one of claims 1 to 10.

36. A communication apparatus, comprising a processor and a memory, wherein the processor is coupled to the memory, and the processor is configured to implement the method according to any one of claims 11 to 17.

37. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus; and the processor is configured to implement the method according to any one of claims 1 to 10 by using a logic circuit or executing code instructions.

38. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus; and the processor is configured to implement the method according to any one of claims 11 to 17 by using a logic circuit or executing code instructions.

39. A computer-readable storage medium, wherein the computer-readable storage medium stores a computer program or instructions, and when the computer program or the instructions are executed by a communication apparatus, the method according to any one of claims 1 to 10 or 11 to 17 is implemented.

40. A communication system, comprising the apparatus according to any one of claims 18 to 27 and the apparatus according to any one of claims 28 to 34.

Network device 1
(macro base station)

Network device 2
(micro base station)

Terminal device

Network device 3
(micro base
station)

FIG. 1

| Terminal device | | Network device |
|---|---|---|

S201: Random access initialization

S202: Random access preamble

S203: Random access response

S204: Msg3

S205: Contention resolution

FIG. 2

```
┌──────────┐                          ┌──────────┐
│ Terminal │                          │ Network  │
│  device  │                          │  device  │
└──────────┘                          └──────────┘
     │                                     │
     │        S301: MsgA                   │
     │────────────────────────────────────▶│
     │                                     │
     │        S302: MsgB                   │
     │◀────────────────────────────────────│
     │                                     │
```

FIG. 3

```
   ╭──────────╮           ╭──────────╮                       ╭──────────╮
   │ Terminal │           │First cell│                       │Second cell│
   │  device  │           ╰──────────╯                       ╰──────────╯
   ╰──────────╯                │                                  │
        │                      │                                  │
┌───────────────────────────────────────────────────────┐        │
│ S401: Cell selection or cell reselection, camp on the first cell│
└───────────────────────────────────────────────────────┘        │
        │                      │                                  │
┌──────────────────────────┐   │                                  │
│ S402: RRC connected mode  │   │                                  │
└──────────────────────────┘   │                                  │
        │                      │                                  │
        │   S403: RRC release message                             │
        │◀──────────────────────                                  │
        │                      │                                  │
┌──────────────────────┐       │                                  │
│ S404: RRC idle mode   │       │                                  │
└──────────────────────┘       │                                  │
        │                      │                                  │
┌────────────────────────────────────────────────────────────────────────┐
│ S405: The terminal device performs cell reselection, and selects the second cell for camping │
└────────────────────────────────────────────────────────────────────────┘
        │                      │                                  │
┌──────────────────────────┐   │                                  │
│ S406: RRC connected mode  │   │                                  │
└──────────────────────────┘   │                                  │
        │                      │                                  │
```

FIG. 4

Terminal device

First cell

Second cell

S501: Cell selection, camp on the first cell

S502: System message

S503: Read a cell reselection priority of a CC 2 from the system message

S504: The terminal device performs cell reselection, and selects the second cell in which the CC 2 is located for camping

FIG. 5

Network device

Terminal device

First cell

Second cell

S601: Cell selection or cell reselection, select the first cell for camping

S602: First message, including information about the second cell

Manner A

S603A: Second message

S604A: Third message

Manner B

S603B: Second message

S604B: Third message

S605: Determine, based on the third message, that the terminal device camps on a third cell, where the third cell is one of the first cell and the second cell

FIG. 6

Network device

Terminal
device

First cell

Second
cell

S701: Cell selection or cell reselection, select the
first cell for camping

S702: First message,
including information
about the second cell

S703: Determine that the terminal
device camps on a third cell, where
the third cell is one of the first cell
and the second cell

FIG. 7

Network device

Terminal device

First CC

Fifth CC

S801: Select the first CC for camping

S802: First message, including information about the fifth CC

Manner A

S803A: Second message

S804A: Third message

Manner B

S803B: Second message

S804B: Third message

S805: Determine, based on the third message, that the terminal device camps on a sixth CC, where the sixth CC is one of the first CC and the fifth CC

FIG. 8

Communication apparatus 900

Processing unit 910

Transceiver unit 920

FIG. 9

Communication apparatus 1000

Processor 1010

Interface circuit 1020

Bus 1040

Memory 1030

FIG. 10

| | INTERNATIONAL SEARCH REPORT | International application No. |
|---|---|---|
| | | **PCT/CN2020/119390** |

**A. CLASSIFICATION OF SUBJECT MATTER**

H04W 36/00(2009.01)i

According to International Patent Classification (IPC) or to both national classification and IPC

**B. FIELDS SEARCHED**

Minimum documentation searched (classification system followed by classification symbols)

H04W; H04Q

Documentation searched other than minimum documentation to the extent that such documents are included in the fields searched

Electronic data base consulted during the international search (name of data base and, where practicable, search terms used)

CNKI, CNPAT, WPI, EPODOC, 3GPP: 小区, 载波, 测量, 驻留, 重选, 指示, 空闲, 连接, cell, carrier, measur+, camp, reselect +, indicat+, idle, connect+, RRC

**C. DOCUMENTS CONSIDERED TO BE RELEVANT**

| Category* | Citation of document, with indication, where appropriate, of the relevant passages | Relevant to claim No. |
|---|---|---|
| X | CN 110784889 A (CHINA MOBILE COMMUNICATION LTD., RESEARCH INSTITUTE et al.) 11 February 2020 (2020-02-11)<br>claims 1-11 | 1-40 |
| A | CN 111148138 A (VIVO COMMUNICATION TECHNOLOGY CO., LTD.) 12 May 2020 (2020-05-12)<br>entire document | 1-40 |
| A | CN 111491341 A (HUAWEI TECHNOLOGIES CO., LTD.) 04 August 2020 (2020-08-04)<br>entire document | 1-40 |
| A | CN 110839263 A (CHINA MOBILE COMMUNICATION LTD., RESEARCH INSTITUTE et al.) 25 February 2020 (2020-02-25)<br>entire document | 1-40 |
| A | INSTITUTE FOR INFORMATION INDUSTRY. "Solutions for reducing power consumption for measurements of neighbour cells in NB-IoT"<br>*3GPP TSG RAN WG2#99 R2-1708258*, 25 August 2017 (2017-08-25),<br>entire document | 1-40 |
| A | US 2016050590 A1 (QUALCOMM INC.) 18 February 2016 (2016-02-18)<br>entire document | 1-40 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 May 2021** | **24 June 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

International application No.

**PCT/CN2020/119390**

| Patent document cited in search report | | | Publication date (day/month/year) | Patent family member(s) | | | Publication date (day/month/year) |
|---|---|---|---|---|---|---|---|
| CN | 110784889 | A | 11 February 2020 | None | | | |
| CN | 111148138 | A | 12 May 2020 | WO | 2020088277 | A1 | 07 May 2020 |
| CN | 111491341 | A | 04 August 2020 | None | | | |
| CN | 110839263 | A | 25 February 2020 | None | | | |
| US | 2016050590 | A1 | 18 February 2016 | WO | 2016025147 | A1 | 18 February 2016 |
| | | | | CN | 106664619 | A | 10 May 2017 |

Form PCT/ISA/210 (patent family annex) (January 2015)